# EUROPÄISCHE PATENTSCHRIFT

(11) **EP 1 527 543 B1**
(45) Veröffentlichungstag und Bekanntmachung des Hinweises auf die Patenterteilung: **19.09.2007**
(21) Anmeldenummer: 03790639.3
(22) Anmeldetag: 10.07.2003
(51) Int. Cl.: H04L 1/00, G10L 21/02

(54) **FEHLERBEHANDLUNG VON ÜBER EIN KOMMUNIKATIONSNETZ EMPFANGENE NUTZINFORMATIONEN**
ERROR PROCESSING OF USER INFORMATION RECEIVED BY A COMMUNICATION NETWORK
TRAITEMENT D'ERREURS D'INFORMATIONS UTILES RECUES PAR L'INTERMEDIAIRE D'UN RESEAU DE COMMUNICATION

(30) Priorität: 06.08.2002 WO PCT/EP02/08782; 04.09.2002 DE 10240905
(43) Veröffentlichungstag der Anmeldung: 04.05.2005
(73) Patentinhaber: SIEMENS AKTIENGESELLSCHAFT, 80333 München (DE)
(72) Erfinder: MARKE, Matthias, 82178 Puchheim (DE); XU, Wen, 85579 Neubiberg (DE)
(86) Internationale Anmeldenummer: PCT/DE2003/002330
(87) Internationale Veröffentlichungsnummer: WO 2004/021631

(56) Entgegenhaltungen:
- US-A- 5 699 405
- DORBECKER M ET AL: "The cellular text telephone modem - the solution for supporting text telephone functionality in GSM networks" 2001 IEEE INTERNATIONAL CONFERENCE ON ACOUSTICS, SPEECH, AND SIGNAL PROCESSING. PROCEEDINGS (CAT. NO.01CH37221), 2001 IEEE INTERNATIONAL CONFERENCE ON ACOUSTICS, SPEECH, AND SIGNAL PROCESSING. PROCEEDINGS, SALT LAKE CITY, UT, USA, 7-11 MAY 2001, Seiten 1441-1444 vol.3, XP002261951 2001, Piscataway, NJ, USA, IEEE, USA ISBN: 0-7803-7041-4
- PATENT ABSTRACTS OF JAPAN vol. 012, no. 449 (E-686), 25. November 1988 (1988-11-25) & JP 63 176037 A (MITSUBISHI ELECTRIC CORP), 20. Juli 1988 (1988-07-20)

## Beschreibung

Die Erfindung betrifft ein Verfahren und eine Vorrichtung zum Fehler-Korrigieren von über ein Kommunikationsnetz erhaltenen Nutzinformationen.

Dokument D1 (US 5699405) beschreibt, wie Daten- und Sprachsignale eines Kommunikations-Informations-Signals von einem Mobilfunktelefon von zwei Decodern gleichzeitig dekodiert werden. Ein Daten-Signal vom Informationssignal wird dekodiert von einem Daten-Decoder und anschließend entscheidet ein Daten-Signal-Sensor, ob das dekodierte Signal ein normales Daten Signal ist. Nur ein normales Signal wird zu einem Signal-Konverter zum Durchführen einer Code-Konversion weitergeleitet. Das resultierende Signal wird von einer Übermittler-Schaltung ausgegeben. Ein Sprachsignal des Informationssignals wird von einem Sprach-Decoder und anschließend entscheidet ein Sprach-Signal-Sensor, ob das dekodierte Signal ein normales Sprachsignal ist. Nur ein normales Signal wird zu einem Digital/Analog-Wandler zum Transformieren in ein analoges Sprachsignal übermittelt. Die Gültigkeit der dekodierten Signale wird zum Beispiel durch die Variation des Frequenzband und/oder der Amplitude des dekodierten Signals verifiziert. Aufgrund der gleichzeitigen Dekodier-Operationen werden die Daten und die Sprachsignale effizient von einer Modem-Karte mit hoher Geschwindigkeit dekodiert. Es gibt daher eine Modem-Karte für ein Mobilfunktelefon zum gleichzeitigen Senden von Daten- und Sprachsignale an ein Informationsterminal. Ein Informationsterminal kann dabei ein Computer (Spalte 1, Zeile 63) sein.

Bei der mobilen Texttelephonie ist für empfangene Texte eine Kaskade eines Mobilfunk-Empfängers (z.B. GSM Modem) und eines CTM-Empfängers (Cellular Text telephone Modem) vorgesehen. Ein konkretes Beispiel ist der US-amerikanische Texttelephoniestandard (vgl. 3GPP TS 26.226), bei dem Texte zuerst durch die digitale Codierung eines Alphabets, Kanalcodierung und Frequenzmodulation in Tonsignale umgewandelt und dann die Tonsignale in gleicher Weise wie normale Sprache von Mobilfunkendgeräten (Mobilfunk-Modems) weiter bearbeitet (Sprachcodierung, Kanalcodierung) und über einen Mobilfunkkanal übertragen werden. Um die sichere Übertragung von Notrufen zu garantieren sind maximale Fehlerraten bei der Übertragung der einzelnen Buchstaben vorgeschrieben (vgl. 3GPP TS 26.231). Aus den folgenden Gründen passen jedoch ein CTM-Empfänger und ein Mobilfunk-Empfänger nicht gut zusammen und das Gesamtsystem (Mobilfunk + CTM) kann insbesondere im Sinne der Übertragungseffizienz keine ausreichend gute Performance erzielen:
Ein Mobilfunk-Sprach-Coder/Decoder (wie z. B. der AMR) im Mobilfunk ist für eine Codierung/Decodierung von menschlicher Sprache optimiert. Für die künstlich generierten (CTM) Tonsignale ist der Sprach Coder/Decoder nicht effizient.
   - Bei schlechten Kanalbedingungen ist die Fehlerverschleierung, die für das menschliche Gehöhr optimiert ist, nicht mehr günstig für die Übertragung der Textinformation.

Aufgabe der Erfindung ist es, ein Verfahren und eine Vorrichtung in einem Kommunikationsnetz zur besseren Erfüllung von Anforderungen bei der Übertragung von Nutzinformationen enthaltenden Daten vorzuschlagen.

Die Aufgabe wird erfindungsgemäß durch die Gegenstände der unabhängigen Patentansprüche bezüglich des Verfahrens und der Vorrichtung gelöst. So wird im CTM-Empfänger die Übertragungscharakteristik des Sprachkanals in Kombination mit zusätzlich übermittelten Daten über die Datenrate des Sprach-Coders und die im Kanal-Decoder bestimmte Kanalqualität in ein Zuverlässigkeitsmaß umgerechnet. Dieses Zuverlässigkeitsmaß wird bei der Fehlerkorrektur der empfangenen Daten des CTM-Empfängers verwendet, um das Sendesignal möglichst fehlerfrei zu rekonstruieren. Gleichzeitig bietet sich bei der Decodierung des Sprachkanalsignals, insbesondere beim AMR-Sprach-Decoder, die Möglichkeit, Mechanismen der Sprachsynthese, die auf das menschliche Gehör hin optimiert sind und für die Übertragung von Tonsignalen störend wirken (Fehlerverschleierung), zu deaktivieren. So kann die Information des CTM-Empfängers, dass ein CTM-Text-Tonsignal übertragen wird, dem Sprach-Decoder übermittelt werden, um die Sprachsynthese für Nutzinformationen (CTM-Text-Tonsignal) und nicht für menschliche Sprache zu optimieren. Eine Nutzinformation ist die Information, die senderseitig den in den Strom der Daten eingefügt wird und empfangsseitig wieder aus den Daten gewonnen wird, wie zum Beispiel Text, Sprach-, Bild-, Videosignale, etc.. Die Daten sind dabei die empfangenen Signale, die in einer für die Übertragung typischen Weise codiert sind.
Einige Zusatzinformationen werden zwischen dem CTM-Empfänger und dem Kommunikationsendgerät-Empfänger, wie z. B. Mobilfunkendgerät, Festnetz-Endgerät, etc. ausgetauscht, vor allem die Parameter BFI und AMR Modus aus dem Kommunikationsendgerät-Empfänger, und der Indikator des CTM Signals aus dem CTM-Text-Empfänger. Somit wird die Performance des Gesamtsystems wesentlich verbessert. Da das Verfahren nur die Empfangsseite betrifft, bleibt der Standard unberührt.
Die Zusatzinformationen, die der CTM-Empfänger erhält, können gezielt genutzt werden, um die genannten Nachteile der Übertragung von Nutzinformationen enthaltenden Daten über Sprach-Coder auszugleichen. Erfindungsgemäß kann der Sprach-Decoder, wenn die Information vorliegt, dass Nutzinformationen enthaltenden Daten übertragen werden, Mechanismen der Fehlerverschleierung unterdrücken.
Die Übertragungseffizienz wird dadurch deutlich erhöht und die geforderten maximalen Fehlerraten können eingehalten werden, was z.B. Voraussetzung für den Verkauf von Mobilfunkgeräten in den USA ist.
Weiterbildungen der Erfindung sind in den Unteransprüchen angegeben.

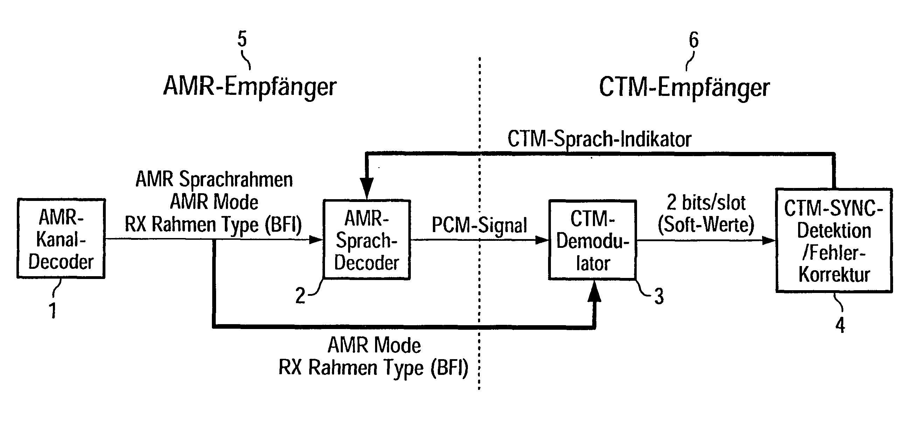

Die Erfindung wird anhand eines in der Figur dargestellten Ausführungsbeispiels näher erläutert. Dabei zeigt
- Figur 1: eine vereinfachte Darstellung für das Unterdrücken der Fehlerverschleierung bei der Sprachdecodierung und der Fehlerkorrektur unter Zuhilfenahme der Zusatzinformationen betreffend die zu übertragenden Daten.

Figur 1 zeigt, wie der AMR-Kanal-Decoder (1) vom Entzerrer die übertragenen Daten in Form von TDMA-Bursts erhält und so weit möglich Kanalfehler korrigiert. Anhand einer Prüfsumme (CRC) erkennt er (1), ob der kanaldecodierte AMR Sprachrahmen brauchbar oder unbrauchbar (im Sinne von zu stark durch die Übertragung gestört) ist.
Er übergibt an den AMR-Sprach-Decoder (2) den decodierten Sprachrahmen, den AMR Modus und die Zusatzinformation, ob der Rahmen brauchbar ist. Letztere Information ist im Parameter RX_FRAME_TYPE enthalten (BFI = Bad Frame Indikator). Der AMR-Sprach-Decoder (2) nutzt den BFI, um unbrauchbare Rahmen nicht in Sprache (Audio-Signal) umzusetzen, sondern das Audio-Signal in diesem Falle aus Rahmen aus der Vergangenheit so zu synthetisieren, dass das menschliche Ohr nur eine minimale Störung wahrnimmt (Fehlerverschleierung). Dieser Mechanismus kann deaktiviert werden, wenn über den CTM-Text/Sprach Indikator signalisiert wird, dass Nutzinformationen enthaltende Daten (CTM Signal) übertragen werden. Am Ausgang des Moduls liegt ein PCM (Puls Code Modulation) Signal an. Man kann den BFI in ungenutzten Bits (LSB) des PCM-Signals übertragen. Vorteil ist dabei, dass man mit der vorhandenen Hardware den Austausch der Zusatzinformation realisieren kann.
Der CTM-Empfänger (6) besteht u.a. aus einer Demodulator-Einheit (3) und dem Fehlerkorrektur-Modul (4). In ersterem werden aus 40 PCM-Signalwerten zwei Bits generiert, die frequenzmoduliert im PCM-Signal enthalten sind. Den Bits wird eine Zuverlässigkeitsinformation ("Softwerte") beigefügt, die angibt, wie wahrscheinlich die dekodierten Daten den ursprünglich gesendeten Daten entsprechen. Die Zuverlässigkeitsinformation ist für CTM-Text - Nutzdaten fälschlicherweise hoch, wenn die 40 Signalwerte einem AMR Rahmen entstammen, der eigentlich unbrauchbar empfangen wurde. Denn durch Fehlerverschleierung besitzt das Signal wenige akustische Störanteile, aber die frequenzmodulierte Information ist einem Sprachrahmen der Vergangenheit entnommen und deshalb zum aktuellen Zeitpunkt nicht verwertbar. Vom AMR-Kanal-Decoder (1) erhält der Demodulator (3) aber die Informationen AMR Modus und RX Frame Type (hier
ist der BFI enthalten). Diese gehen in die Berechnung der Zuverlässigkeitsinformation ein und die Übertragungseffizienz wird gesteigert. Die demodulierten CTM-Text Bits werden im CTM-Empfänger (6) nach einer Synchronisationssequenz, einer Abfolge von bestimmten Frequenzen, durchsucht, die darauf hinweisen, dass danach ein CTM-Text folgt. Wird diese Sequenz erkannt, wird der CTM-Text/Sprach Indikator auf den Wert "CTM-Text" gesetzt und an den AMR-Sprach-Decoder (2) weitergeleitet, damit dort die Fehlerverschleierung unterdrückt wird. Am Ende der CTM-Text - Nutzdatenübertragung, die mit IDLE-Characters vom Sender signalisiert wird, wird der Indikator wieder auf den Wert "Sprache" gesetzt und die Fehlerverschleierung kann wieder aktiviert werden.

## Patentansprüche

1. Verfahren zum Dekodieren und/oder Detektieren von Nutzinformationen enthaltenden Daten, die über ein Kommunikationsnetz empfangen wurden,
**dadurch gekennzeichnet,**
- **dass** mit einem Kanal-Decoder (1) in einem Kommunikationsendgerät-Empfänger (5) empfangene Daten zumindest teilweise ausgewertet, korrigiert und an einen Sprach-Decoder (2) weitergeleitet werden,
- **dass** mit einem Sprach-Decoder (2), soweit erforderlich, die Daten mit Fehlerverschleierung dekodiert und die Nutzinformationen an einen Cellular Text Telephone Modem-Empfänger (6) weitergeleitet werden,
- **dass** mit einem Demodulator (3) im Cellular Text Telephone Modem-Empfänger (6) diese Daten mit einer Zuverlässigkeitsinformation demoduliert und an ein Fehler-Korrektur-Modul (4) weitergeleitet werden,
- **dass** mit dem Fehler-Korrektur-Modul (4) die erhaltenen Nutzinformationen hinsichtlich einer Sequenz durchsucht werden, ein Wert in einem Cellular Text Telephone Modem-Text/Sprach-Indikator gesetzt wird, der angibt, dass die Daten Cellular Text Telephone Modem-Text Daten sind, bei erfolgter Detektion der Sequenz wird die Fehlerkorrektur gemäss der Zuverlässigkeitsinformation angepasst und der gesetzte Cellular Text Telephone Modem-Text/Sprach-Indikator wird an den Sprach-Decoder (2) zum Unterdrücken der Fehlerverschleierung im Sprach-Decoder (2) weitergeleitet.

2. Verfahren nach Anspruch 1,
**dadurch gekennzeichnet,**
**dass** zur Anpassung der Fehlerbehandlung die Fehlerverschleierung im Sprach-Decoder (2) unterdrückt wird.

3. Verfahren nach Anspruch 2,
**dadurch gekennzeichnet,**
**dass** ein Cellular Text Telephone Modem-Text/Sprach-Indikator, der angibt, dass die Daten Cellular Text Telephone Modem-Text-Daten sind, zur Unterdrückung der Fehlerverschleierung an den Sprach-Decoder (2) des Kommunikationsendgerät-Empfängers (5) gesendet wird.

4. Verfahren nach einem der vorhergehenden Ansprüche,
**dadurch gekennzeichnet,**
**dass** zur Anpassung der Fehlerbehandlung die Fehlerkorrektur im Fehler-Korrektur-Modul (4) angepasst wird.

5. Verfahren nach einem der vorhergehenden Ansprüche, **dadurch gekennzeichnet, dass** als Kommunikationsnetz ein zellulares mobiles Kommunikationsnetz verwendet wird.

6. Verfahren nach einem der vorhergehenden Ansprüche,
**dadurch gekennzeichnet,**
**dass** der Kommunikationsendgerät-Empfänger (5) ein Empfänger in einem Mobilfunkendgerät ist.

7. Verfahren nach einem der vorhergehenden Ansprüche,
**dadurch gekennzeichnet,**
**dass** am Ende der Cellular Text Telephone Modem-Text-Übertragung der Cellular Text Telephone Modem-Text/Sprach-Indikator auf einen Wert gesetzt wird, der angibt, dass die nachfolgend empfangenen Daten nun Sprachinformationen enthalten.

8. Verfahren nach einem der vorhergehenden Ansprüche,
**dadurch gekennzeichnet,**
**dass** der Kommunikationsendgerät-Empfänger (5) ein Adaptive Multi Rate-Empfänger ist.

9. Verfahren nach einem der vorhergehenden Ansprüche,
**dadurch gekennzeichnet,**
**dass** den empfangenen Daten mindestens eine Zusatzinformation vom Kommunikationsendgerät-Empfänger (5) hinzugefügt wird.

10. Verfahren nach einem der vorhergehenden Ansprüche,
**dadurch gekennzeichnet,**
**dass** mindestens eine Zusatzinformation betreffend die zu übertragenden Daten zur Steuerung der Fehlerkorrektur der Daten vom Kommunikationsendgerät-Empfänger (5) an den Cellular Text Telephone Modem-Empfänger (6) weitergeleitet werden.

11. Verfahren nach einem der Ansprüche 5-10,
**dadurch gekennzeichnet,**
**dass** die Zusatzinformation Bad Frame Indikator und/oder Adaptive Multi Rate-Modus zwischen dem Kommunikationsendgerät-Empfänger (5) und dem Cellular Text Telephone Modem-Empfänger (6) ausgetauscht wird.

12. Verfahren nach einem der vorhergehenden Ansprüche,
**dadurch gekennzeichnet,**
**dass** mindestens eine Zusatzinformation betreffend die zu übertragenden Daten in ungenutzten Bits der Daten ausgetauscht werden.

13. Verfahren nach einem der vorhergehenden Ansprüche,
**dadurch gekennzeichnet,**
**dass** die vom Cellular Text Telephone Modem-Empfänger (6) erhaltenen Zusatzinformationen zur Fehlerkorrektur der Daten verwendet werden.

14. Verfahren nach einem der vorhergehenden Ansprüche,
**dadurch gekennzeichnet,**
**dass** vom Cellular Text Telephone Modem-Empfänger (6) aus der Klangqualität des Kanal-Decoders (1) und der Datenrate des Sprach-Decoders (2) ein die Qualität der Mobilfunk-Übertragung und/oder der Demodulation und/oder Dekodierung der Nutzdaten betreffendes Zuverlässigkeitsmaß errechnet wird.

15. Verfahren nach Anspruch 14,
**dadurch gekennzeichnet,**
**dass** dieses Zuverlässigkeitsmaß bei der Fehlerkorrektur der Nutzinformationen im Cellular Text Telephone Modem-Empfänger (6) verwendet wird.

16. Verfahren nach einem der vorhergehenden Ansprüche,
**dadurch gekennzeichnet,**
**dass** die Nutzinformation aus Text, Sprach-, Bild-, und/oder Videosignalen besteht.

17. Vorrichtung zum Dekodieren und/oder Detektieren von Nutzinformationen enthaltenden Daten, die über ein Kommunikationsnetz empfangen wurden,
- mit einem Kanal-Decoder (1) in einem Kommunikationsendgerät-Empfänger (5) zum Auswerten und zumindest teilweisen Korrigieren der empfangenen Daten und zum Weiterleiten dieser an einen Sprach-Decoder (2),
- mit einem Sprach-Decoder (2) zur Dekodierung der Daten mit, soweit erforderlich, Fehlerverschleierung und zur Weiterleitung der Nutzinformationen an einen Cellular Text Telephone Modem-Empfänger (6),
- mit einem Demodulator (3) im Cellular Text Telephone Modem-Empfänger (6) zum Demodulieren und zum Weiterleiten dieser Daten mit einer Zuverlässigkeitsinformation an ein Fehler-Korrektur-Modul (4),
- mit dem Fehler-Korrektur-Modul (4) zum Durchsuchen der erhaltenen Nutzinformationen hinsichtlich einer Sequenz, zum Setzen eines Wertes, der angibt, dass die Daten Cellular Text Telephone Modem-Text Daten sind, in einem Cellular Text Telephone Modem-Text/Sprach-Indikator bei erfolgter Detektion der Sequenz, zur Anpassung der Fehlerkorrektur gemäss der Zuverlässigkeitsinformation und zum Weiterleiten des gesetzten Cellular Text Telephone Modem-Text/Sprach-Indikators an den Sprach-Decoder (2) zum Unterdrücken der Fehlerverschleierung im Sprach-Decoder (2).

18. Vorrichtung nach Anspruch 17, mit einem Fehler-Korrektur-Modul (4) zum Fehler-Korrigieren der Nutzinformationen enthaltenden Daten.

19. Vorrichtung nach einem der vorhergehenden Ansprüche,
**dadurch gekennzeichnet,**
**dass** ein Sprach-Decoder (2) zum Weiterleiten ein Puls Code Modulations Signal verwendet.

## Claims

1. Method for decoding and/or detection of data, containing user information, that was received via a communications network,
**characterised in that**
- data received in a communications terminal receiver (5) by means of a channel decoder (1) is at least partly evaluated, corrected and forwarded to a voice decoder (2),
- a voice decoder (2) decodes the data using error concealment, where it is required, and forwards the user information to a Cellular Text Telephone Modem receiver (6),
- a demodulator (3) in the Cellular Text Telephone Modem receiver (6) demodulates this data with reliability information and forwards it to an error-correction module (4),
- the error-correction module (4) scans the received user information for a sequence, in order to set, in a Cellular Text Telephone Modem text/voice indicator, a value that indicates that the data is Cellular Text Telephone Modem data, modifies the error correction in accordance with the reliability information when the sequence is detected, and forwards the set Cellular Text Telephone Modem text/voice indicator to the voice decoder (2) in order to suppress the error concealment in the voice decoder (2).

2. Method according to claim 1,
**characterized in that**
the error concealment in the voice decoder (2) is suppressed as a means of modifying the error handling.

3. Method according to claim 2,
**characterised in that**
a Cellular Text Telephone Modem text/voice indicator, that indicates that the data is Cellular Text Telephone Modem text data, is sent to the voice decoder (2) of the communications terminal receiver (5) in order to suppress the error concealment.

4. Method according to one of the preceding claims,
**characterised in that**
the error correction in the error-correction module (4) is modified as a means of modifying the error handling.

5. Method according to one of the preceding claims,
**characterised in that**
a cellular mobile communications network is used as a communications network.

6. Method according to one of the preceding claims,
**characterised in that**
the communications terminal receiver (5) is a receiver in a mobile radio terminal.

7. Method according to one of the preceding claims
**characterised in that**
at the end of the Cellular Text Telephone Modem text transmission, the Cellular Text Telephone Modem text/voice indicator is set to a value that indicates that the subsequently received data now contains voice information.

8. Method according to one of the preceding claims,
**characterised in that**
the communications terminal receiver (5) is an Adaptive Multi-Rate receiver.

9. Method according to one of the preceding claims,
**characterised in that**
at least one piece of additional information is added by the communications terminal receiver (5) to the received data.

10. Method according to one of the preceding claims,
**characterised in that**
at least one piece of additional information concerning the data to be transmitted is forwarded by the communications terminal receiver (5) to the Cellular Text Telephone Modem receiver (6) for controlling the error correction of the data.

11. Method according to one of the claims 5-10,
**characterised in that**
the Bad Frame Indicator and/or Adaptive Multi-Rate mode additional information is exchanged between the communications terminal receiver (5) and the Cellular Text Telephone Modem receiver (6).

12. Method according to one of the preceding claims,
**characterised in that**
at least one piece of additional information concerning the data to be transmitted is exchanged in unused bits of the data.

13. Method according to one of the preceding claims,
**characterised in that**
the additional information received by the Cellular Text Telephone Modem receiver (6) is used for error correction of the data.

14. Method according to one of the preceding claims,
**characterised in that**
a reliability measure concerning the quality of the mobile radio transmission and/or the demodulation and/or decoding of the user data is calculated by the Cellular Text Telephone Modem receiver (6) from the sound quality of the channel decoder (1) and the data rate of the voice decoder (2).

15. Method according to claim 14,
**characterised in that**
this reliability measure is used in the error correction of the user information in the Cellular Text Telephone Modem receiver (6).

16. Method according to one of the preceding claims,
**characterised in that**
the user information consists of text, voice signals, image signals and/or video signals.

17. Device for the decoding and/or detection of data, containing user information, that was received via a communications network,
- having a channel decoder (1) in a communications terminal receiver (5) for the analysis and at least partial correction of the received data and for forwarding this to a voice decoder (2),
- having a voice decoder (2) for decoding the data using error concealment, where it is required, and for forwarding the user information to a Cellular Text Telephone Modem receiver (6),
- having a demodulator (3) in the Cellular Text Telephone Modem receiver (6) for the demodulation and for forwarding this data with reliability information to an error-correction module (4),
- having the error-correction module (4) for scanning the received user information for a sequence, in order to set in a Cellular Text Telephone Modem text/voice indicator, when the sequence is detected, a value that indicates that the data is Cellular Text Telephone Modem data, for modifying the error correction in accordance with the reliability information and for forwarding the set Cellular Text Telephone Modem text/voice indicator to the voice decoder (2) in order to suppress the error concealment in the voice decoder (2).

18. Device according to claim 17,
having an error-correction module (4) for error correction of the data containing the user information.

19. Device according to one of the preceding claims,
**characterised in that**
a voice decoder (2) is used for forwarding a pulse code modulation signal.

## Revendications

1. Procédé pour décoder et/ou détecter des données qui contiennent des informations utiles et ont été reçues par l'intermédiaire d'un réseau de communication,
**caractérisé en ce que**
- au moyen d'un décodeur de canal (1) dans un récepteur de terminal de communication (5), des données reçues sont, au moins en partie, évaluées, corrigées et retransmises vers un décodeur vocal (2),
- au moyen d'un décodeur vocal (2), dans la mesure où cela est nécessaire, les données sont décodées avec masquage d'erreurs et les informations utiles sont retransmises à un récepteur «Cellular Text Telephone Modem» (6),
- au moyen d'un démodulateur (3) dans le récepteur «Cellular Text Telephone Modem» (6), ces données sont, avec une information de fiabilité, démodulées et retransmises à un module de correction d'erreurs (4),
- au moyen du module de correction d'erreurs (4), une séquence est recherchée dans les informations utiles reçues, une valeur dans un indicateur de texte / vocal «Cellular Text Telephone Modem» est forcée, laquelle indique que les données sont des données textuelles «Cellular Text Telephone Modem», la correction d'erreurs, lorsque la détection de la séquence a eu lieu, est adaptée conformément à l'information de fiabilité et l'indicateur de texte / vocal «Cellular Text Telephone Modem» armé est retransmis au décodeur vocal (2) pour supprimer le masquage d'erreurs dans le décodeur vocal (2).

2. Procédé selon la revendication 1,
**caractérisé en ce que**,
aux fins de l'adaptation du traitement d'erreurs, le masquage d'erreurs est supprimé dans le décodeur vocal (2).

3. Procédé selon la revendication 2,
**caractérisé en ce**
**qu'**un indicateur de texte / vocal «Cellular Text Telephone Modem» qui indique que les données sont des données textuelles «Cellular Text Telephone Modem» est envoyé au décodeur vocal (2) du récepteur de terminal de communication (5) pour supprimer le masquage d'erreurs.

4. Procédé selon l'une des revendications précédentes,
**caractérisé en ce que**,
aux fins de l'adaptation du traitement d'erreurs, il y a adaptation de la correction d'erreurs dans le module de correction d'erreurs (4).

5. Procédé selon l'une des revendications précédentes,
**caractérisé en ce**
**qu'**on utilise, en tant que réseau de communication, un réseau de communication mobile cellulaire.

6. Procédé selon l'une des revendications précédentes,
**caractérisé en ce que**
le récepteur de terminal de communication (5) est un récepteur dans un terminal radio mobile.

7. Procédé selon l'une des revendications précédentes,
**caractérisé en ce que**,
au terme de la transmission de texte «Cellular Text Telephone Modem», l'indicateur de texte / vocal «Cellular Text Telephone Modem» est armé avec une valeur qui indique que les données reçues ensuite contiennent à présent des informations vocales.

8. Procédé selon l'une des revendications précédentes,
**caractérisé en ce que**
le récepteur de terminal de communication (5) est un récepteur »Adoptive Multi Rate ».

9. Procédé selon l'une des revendications précédentes,
**caractérisé en ce**
**qu'**au moins une information supplémentaire est ajoutée par le récepteur de terminal de communication (5) aux données reçues.

10. Procédé selon l'une des revendications précédentes,
**caractérisé en ce**
**qu'**au moins une information supplémentaire concernant les données à transmettre est retransmise, aux fins de la commande de la correction d'erreurs des données, du récepteur de terminal de communication (5) au récepteur «Cellular Text Telephone Modem» (6).

11. Procédé selon l'une des revendications 5 à 10,
**caractérisé en ce que**
l'information supplémentaire «indicateur de trame erronée» ou «mode multidébit adaptatif» est échangée entre le récepteur de terminal de communication (5) et le récepteur «Cellular Text Telephone Modem» (6) .

12. Procédé selon l'une des revendications précédentes,
**caractérisé par**
l'échange, dans des bits inutilisés des données, d'au moins une information supplémentaire concernant les données à transmettre.

13. Procédé selon l'une des revendications précédentes,
**caractérisé en ce que**
les informations supplémentaires reçues par le récepteur «Cellular Text Telephone Modem» (6) sont utilisées aux fins de la correction d'erreurs des données.

14. Procédé selon l'une des revendications précédentes,
**caractérisé en ce**
**qu'**une mesure de la fiabilité concernant la qualité de la transmission radio mobile et/ou la démodulation et/ou le décodage des données utiles est calculée par le récepteur «Cellular Text Telephone Modem» (6) à partir de la qualité du son du décodeur de canal (1) et du débit de données du décodeur vocal (2).

15. Procédé selon la revendication 14,
**caractérisé en ce que**
cette mesure de la fiabilité est utilisée lors de la correction d'erreurs des informations utiles dans le récepteur «Cellular Text Telephone Modem» (6).

16. Procédé selon l'une des revendications précédentes,
**caractérisé en ce que**
l'information utile se compose de signaux textuels, vocaux, de type image et/ou vidéo.

17. Dispositif pour décoder et/ou détecter des données contenant des informations utiles qui ont été reçues par l'intermédiaire d'un réseau de communication,
- avec un décodeur de canal (1) dans un récepteur de terminal de communication (5) pour évaluer et au moins partiellement corriger les données reçues et pour retransmettre celles-ci à un décodeur vocal (2),
- avec un décodeur vocal (2) pour décoder les données avec, dans la mesure où cela est nécessaire, un masquage d'erreurs et pour retransmettre les informations utiles à un récepteur «Cellular Text Telephone Modem» (6),
- avec un démodulateur (3) dans le récepteur «Cellular Text Telephone Modem» (6) pour démoduler et pour retransmettre ces données avec une information de fiabilité à un module de correction d'erreurs (4),
- avec le module de correction d'erreurs (4) pour rechercher une séquence dans les informations utiles reçues, pour forcer une valeur, qui indique que les données sont des données textuelles «Cellular Text Telephone Modem», dans un indicateur de texte / vocal «Cellular Text Telephone Modem» lorsque la détection de la séquence a eu lieu, pour adapter la correction d'erreurs conformément à l'information de fiabilité et pour retransmettre l'indicateur de texte / vocal «Cellular Text Telephone Modem» armé au décodeur vocal (2) pour supprimer le masquage d'erreurs dans le décodeur vocal (2).

18. Dispositif selon la revendication 17, comportant un module de correction d'erreurs (4) pour la correction d'erreurs des données contenant des informations utiles.

19. Dispositif selon l'une des revendications précédentes,
**caractérisé en ce**
**qu'**un décodeur vocal (2) utilise un signal de modulation par impulsion codée aux fins de la retransmission.
